# EUROPEAN PATENT APPLICATION

(11) **EP 0 647 872 A2**
(43) Date of publication of application: **12.04.1995**
(21) Application number: 94202734.3
(22) Date of filing: 22.09.1994
(51) Int. Cl.: G02F 1/1335, G02B 5/30

(54) **Retardation layer having thin glass substrates**

(30) Priority: 29.09.1993 EP 93202788
(71) Applicant: Akzo Nobel N.V., NL-6824 BM Arnhem (NL)
(72) Inventor: Bosma, Martin, 6813 KN Arnhem (NL); Venema, Jan Willem, 6828 EB Arnhem (NL); Picken, Stephen James, 6824 GM Arnhem (NL); Möhlmann, Gustaaf Ronald, 6952 CL Dieren (NL)
(74) Representative: Schalkwijk, Pieter Cornelis

(57) **Abstract**

The present invention is in the field of retardation layers, more particulary in the field of retardation layers based on super-twisted nematic (STN) liquid crystalline layers. The retardation layers according to the invention are characterized in that, the liquid crystalline polymer is placed between glass substrates of which at least one has a thickness of 20 - 500 micrometers. The use of said thin glass substrates reduces the weigth and thickness of the retardation layer.

The LC polymer film may also be placed between the substrate of the display cell and a thin glass substrate. In a further embodiment of the invention the LC polymer film is placed between the polarizer and a thin glass substrate. In these embodiments of the invention a second thin glass substrate is not necessary and the thickness and weigth of the retardation layer is further reduced.

## Description

The present invention is in the field of retardation layers comprising a twisted nematic liquid crystalline polymer film, more particulary in the field of retardation layers based on super-twisted nematic (STN) liquid crystalline layers. Said retardation layers are described in EP-A1-0 565 182 and EP-A3-0 380 338. For further explanation of retardation layers reference may be had in these patent publications. In theory STN retardation layers can fully compensate the optical effects that occur in STN display cells. For this reason, STN retardation layers are regarded to be superior compared to uniaxially stretched polymer films.

The required thickness of liquid crystalline polymer (LCP) STN retardation layers is depending on the birefringence of the LCP approximately 5-9 micrometers. Due to this low thickness of the LCP layer in general a suitable substrate (carrier) is used. Up till now, thick glass substrates (0,7 mm) are used for low molecular twisted nematic material. When used as retardation layers in D-STN-LCP, the use of said thick substrates has several drawbacks. The substrates are heavy and their use results in thick retardation layers.

The retardation layers according to the invention are characterized in that, the liquid crystalline polymer is placed between glass substrates of which at least one has a thickness of 20 - 500 micrometers.

Liquid crystalline polymers have a higher mechanical strength than low molecular material. Therefore, glass substrates having a thickness of 20-500 micrometers instead of thick glass substrates may be used. By liquid crystalline polymers is meant: liquid crystalline polymers, liquid crystalline glasses and crosslinked liquid crystalline polymers.

On the thin glass substrates a polyimide orientation layer may be coated, cured and rubbed in the appropriate direction. A liquid crystalline polymer may be placed between the glass substrates having both a polymide orientation layer.

The PI alignment layers can be replaced by other methods of inducing orientation e.g. oblique evaporated SiO. The tilt of the uniform planar boundary conditions can be adjusted if necessary by the type of orienting layer and/or the used method of rubbing. The twisted retardation layer preferrably possesses the same retardation value (Δn X d), an equal twist angle and an opposite twist direction compared to the liquid crystalline display cell. The retardation layer has to be transparent and colourless. Additional requirements include thermal stability, robustness and and intoxicity.

The twist angle of a (S)TN display cell is typically 240 ° but may be any other suitable value. In the case of an angle of rotation of 90 ° (or -90°), the film is generally called "twisted nematic". For a TFT-TN compensation layer a twist of 90 ° (or -90°) is required. If the angle of rotation is greater, the film is called "supertwisted nematic". In addition this invention also concerns retardation layers with an angle of rotation smaller of 0° (no twist) to 90 ° (or -90°). For convenience these layers are also called "twisted nematic" here. In the case of an angle of rotation of 0°, the arrangement of the liquid crystalline layer will be uniform planar. If dyes are blended in the liquid crystalline polymer, the retardation layer having an angle of rotation of 0° may be used as a polarizer. At angles of rotation exceeding 360 ° the structure goes through more than one full rotation within a single layer. The lenght covered by the structure in a full rotation is called the pitch. The invention is also directed to retardation layers having more than one pitch (even more than 5 pitches).
A twisted structure is obtained by giving one of the two substrates a different orientation direction from that of the other substrate. To control the direction of rotation of the director (to the left or to the right) and/or to obtain an angle of rotation greater than 90°, the liquid-crystalline material is frequently mixed with a chiral material: the so-called chiral dopant. In principle, any optically active compound may be used to this end. As examples may be mentioned cholesterol derivatives and 4-(4-hexyloxy-benzoyloxy) benzene acid 2-octyl-ester. Ordinarily speaking, up to 5 wt.% of chiral dopant is employed in relation to the total amount of liquid-crystalline material. The required optically active material can also be included into the polymer itself (either in the polymer backbone and/or in the spacers connecting the mesogenic group to the backbone, and/or in the endgroups).

The value of optical retardation (=Δn (birefringence) X d (thickness of the (S)TN layer) may be adjusted by choosing a proper value of the thickness of the layer. This can be done by using spacers of different sizes. This will often require an other polymer and/or dopant concentration in the polymer solution to be used for the spincoating.

The value of the optical retardation generally increases with the decreasing wavelength. Preferentially, the wavelength dependence (dispersion) of Δn X d of the display material and of the LC-material used for the retardation layer are equal. The wavelength dependence may be varied by changing the LC material.
The LC material may be either a nematic LC polymer, a nematic LC-glass or a nematic LC monomer. The LC monomer has to be cross-linked after the orientation process to obtain the required mechanical strength. It is important for the material to have a sufficiently low viscosity in the nematic phase as otherwise the processing time will be unacceptably long. It may also be useful to fine tune the dispersion of the birefringence by using polymer blends or co-polymers.

The LC polymer film may also be placed between the substrate of the display cell and a thin glass substrate. In a further embodiment of the invention the LC polymer film is placed between the polarizer and a thin glass substrate. In these embodiments of the invention a second thin glass substrate is not necessary and the thickness and weigth of the ratardation layer is further reduced.

The invention will be further illustrated with reference to the following unlimiting Example.

### EXAMPLES

Used procedure to make the STN layer:
Used were two glass substrates of a thickness of 100 micrometer. These are coated with Merck Liquicoat ® PA, pre-cured at 60 °C for 15 minutes, cured at 300 °C for 1 hr, and then rubbed in the appropriate direction on a felt cloth in is accordance with the instructions provided by Merck®. To ensure proper adhesion of the PI layer the glass substrates were cleaned in advance using the following procedure:
- ultra-sonic cleaning with a detergent (Q9, Purum GmbH)
- KOH (1 M), 50 °C/l hr
- HNO₃/H₂SO₄/H₂O (1:1:2), 60 °C/l hr
- reflux in isopropylalcohol vapour for 30 minutes or more.
Between each cleansing step a rinsing with demi water is performed. This is a variation on the method as described by W.H. de Jeu in "Physical properties of Liquid Crystals", 1st edition, p.23, Gordon and Breach Science Publishers.

As a polymer we used the compound as shown in figure 1. This is a transparent colourless nematic polyether with a Tg of 45/51 °C and a NI clearing point of 145 °C. The molecular weight (Mw)is about 3000 and the dispersion of the molecular weight (Mw/Mn) is 1.1. The birefringence of this polymer as determined using an Abbe refractometer is about 0.15-0.20 depending on the rate of cooling and the wavelength. This is comparable to the birefringence of active liquid crystalline display mixtures. The required amount of chiral dopant (e.g. Merck CB15) was measured using a Cano wedge and is found to be 2 %(w/w) for the desired STN layer twist of 240° and a layer thickness of 6.0 µm. This dopant leads to a clockwise twist. To obtain this layer thickness cross-linked polymer spheres are used (Dynospheres DL-1060, JSR). About 0.5 %(w/w, based on polyether weight) of these spheres are added to a 25 %(w/w) dichloromethane solution of the polymer. Prior to this the polymer solution was filtered over a 0.5 µm Teflon filter to remove dust etc. The polymer solution with the spheres and chiral dopant is spincoated on both of the rubbed PI-glass substrates at 1500 rpm/20 °C in a saturated dichloromethane environment. The spincoating was performed in a dust free cabinet. The obtained polymer layer thickness is about 4 µm. The obtained slides with polymer are dried in a vacuum stove for 16 hr/20 °C. To make the STN cell the slides are assembled at an orientation of 60° of the respective rubbing directions. The sample is placed in an isostatic press which is evacuated, and then brought to 160 °C. After this, the sample is slowly cooled to 125 °C where it is kept for about 4 hr and then cooled to room temperature. The quality of the thus obtained STN layer is evaluated by established optical techniques e.g. E.P. Raynes, Molecular Crystals, Liquid Crystals Letters, 4(3-4), 69-75 (1987).

## Claims

1. Retardation layer comprising a (super) twisted nematic liquid crystalline polymer which is placed between substrates of which at least one has a thickness of 20 - 500 micrometers.

2. Retardation layer according to claim 1, characterised in that the liquid crystalline polymer is placed between substrates of which at least one has a thickness of 30 - 100 micrometers.

3. Retardation layer according to claims 1 or 2, characterised in that the liquid crystalline polymer is placed between a glass substrate with a thickness of 20 - 500 micrometers and the upper glass substrate of a display cell.

4. Retardation layer according to claims 1 or 2, characterised in that the liquid crystalline polymer is placed between a glass substrate with a thickness of 20 - 500 micrometers and the upper polarizer.

5. Retardation layer according to any of the preceding claims, wherein the twisted structure comprises more than one pitch.

6. Polarizer comprising a uniform planar oriented liquid crystalline polymer and a dye, characterised in that the liquid crystalline polymer is placed between substrates of which at least one has a thickness of 20 - 500 micrometers.
